# EUROPEAN PATENT APPLICATION

(11) **EP 4 811 181 A1**
(43) Date of publication of application: **23.09.2026**
(21) Application number: 25190644.2
(22) Date of filing: 21.07.2025
(51) Int. Cl.: G06F 21/31, H04L 9/40

(54) **AUTHORITY MANAGEMENT SYSTEM, AUTHORITY MANAGEMENT PROGRAM, INFORMATION PROCESSING SYSTEM, AND AUTHORITY MANAGEMENT METHOD**

(30) Priority: 21.03.2025 JP 2025047169
(71) Applicant: FUJIFILM Business Innovation Corp., Minato-ku Tokyo (JP)
(72) Inventor: SUZUKI, Tatsuro, Yokohama-shi, Kanagawa (JP); KASHIWAGI, Akinori, Yokohama-shi, Kanagawa (JP)
(74) Representative: Becker Kurig & Partner Patentanwälte mbB

(57) **Abstract**

An authority management system includes: a processor; a user information memory in which user authentication information of a plurality of users who use a plurality of information processing devices is stored; and an authority information memory in which information on manager authority for the plurality of information processing devices of the plurality of users is stored, in which the processor is configured to: receive, from a specific information processing device among the plurality of information processing devices, login information input into the specific information processing device; execute login authentication for a specific user who inputs the login information, based on the user authentication information; determine whether the specific user has manager authority for the specific information processing device, based on the information on the manager authority; and transmit a result of the login authentication and a determination result of the manager authority of the specific user to the specific information processing device.

## Description

### BACKGROUND OF THE INVENTION

### (i) Field of the Invention

A technique of the present disclosure relates to an authority management system, an authority management program, an information processing system, and an authority management method.

### (ii) Description of Related Art

JP5423397B discloses an access authority management system including an authentication device that manages a condition for delegating authority, a service providing device that provides a service in response to a service request, and a service proxy access device that proxies access to the service providing device, in which the authentication device includes a user authentication certificate generation unit that issues, to another device, user authentication information in which information on a user is described, and an authority delegation certificate/token generation unit that issues authority delegation information and a token corresponding to the authority delegation information to the other device, based on information on a user as an authority delegation destination and the condition for delegating the authority, the service proxy access device includes a token request unit that requests issuance of the authority delegation information and the token for accessing the other device, and a user proxy access unit that accesses another service by using the token, and the service providing device includes a user authentication certificate request unit that acquires the user authentication information from the authentication device by using the token.

### SUMMARY OF THE INVENTION

For example, in an information processing device such as a conventional image forming device or a computer, manager authority information on access authority of a manager who manages the device is often stored in the device. In such an information processing device, a user having manager authority inputs manager authority information to the information processing device, so that the information processing device authenticates the user and enables the user to use a function necessary for management. Here, a user having the manager authority may manage a plurality of information processing devices. In this case, the manager authority information is individually managed in each information processing device. In this case, the user needs to understand all the manager authority information for the information processing devices. In a case where the user who manages the device is changed, the manager needs to be re-registered for each information processing device.

An object of the present disclosure is to provide an authority management system, an authority management program, an information processing system, and an authority management method that can facilitate management of manager authority as compared with a case where the manager authority is managed in each of information processing devices, in view of the above-described problems.

In order to achieve the above object, an authority management system according to a first aspect of the preset disclosure includes: a processor; a user information memory in which user authentication information of a plurality of users who use a plurality of information processing devices is stored; and an authority information memory in which information on manager authority for the plurality of information processing devices of the plurality of users is stored, in which the processor is configured to: receive, from a specific information processing device among the plurality of information processing devices, login information input into the specific information processing device; execute login authentication for a specific user who inputs the login information, based on the user authentication information; determine whether the specific user has manager authority for the specific information processing device, based on the information on the manager authority; and transmit a result of the login authentication and a determination result of the manager authority of the specific user to the specific information processing device.

According to a second aspect of the present disclosure, in the authority management system according to the first aspect of the present disclosure, the plurality of information processing devices may include a management device that manages one or more other information processing devices.

An authority management program according to a third aspect of the present disclosure causes a processor to execute processing of: receiving, from a specific information processing device, login information input into the specific information processing device; executing login authentication for a specific user who inputs the login information, based on user authentication information of a plurality of users who use a plurality of information processing devices including the specific information processing device; determining whether the specific user has manager authority for the specific information processing device, based on information on manager authority for the plurality of information processing devices of the plurality of users; and transmitting a result of the login authentication and a determination result of the manager authority of the specific user to the specific information processing device.

An information processing system according to a fourth aspect of the present disclosure includes: a plurality of information processing devices configured to receive login information input from a specific user; and an authority management system including a processor, a user information memory in which user authentication information of a plurality of users who use the plurality of information processing devices is stored, and an authority information memory in which information on manager authority for the plurality of information processing devices of the plurality of users is stored, in which the processor is configured to receive, from a specific information processing device among the plurality of information processing devices, the login information; execute login authentication for the specific user who inputs the login information, based on the user authentication information; determine whether the specific user has manager authority for the specific information processing device, based on the information on the manager authority; and transmit a result of the login authentication and a determination result of the manager authority of the specific user to the specific information processing device.

According to a fifth aspect of the present disclosure, in the information processing system according to the fourth aspect of the present disclosure, in a case where communication between the specific information processing device and the authority management system is unavailable, the specific information processing device may enable information on emergency manager authority stored in the specific information processing device, and determine whether the specific user has the manager authority for the specific information processing device based on the information on the emergency manager authority.

According to a sixth aspect of the present disclosure, in the information processing system according to the fifth aspect of the present disclosure, operations requiring the manager authority granted in a case where the specific user is determined to have the manager authority based on the information on the emergency manager authority may be an initial setting operation and an operation for enabling the communication with the authority management system.

According to a seventh aspect of the present disclosure, in the information processing system according to any one of the fourth to sixth aspects, the specific information processing device may receive both an operation not requiring the manager authority from the specific user authenticated with the login authentication and determined to have the manager authority, and an operation requiring the manager authority.

According to an eighth aspect of the present disclosure, in the information processing system according to the seventh aspect of the present disclosure, the specific information processing device may provide the specific user authenticated with the login authentication and determined to have the manager authority with a mode switching button that is operated in a case where the operation requiring the manager authority is input.

An authority management method according to a ninth aspect of the present disclosure includes: receiving, from a specific information processing device, login information input into the specific information processing device; executing login authentication for a specific user who inputs the login information, based on user authentication information of a plurality of users who use a plurality of information processing devices including the specific information processing device; determining whether the specific user has manager authority for the specific information processing device, based on information on manager authority for the plurality of information processing devices of the plurality of users; and transmitting a result of the login authentication and a determination result of the manager authority of the specific user to the specific information processing device.

According to the first aspect, since the user authentication information of the plurality of users who use the plurality of information processing devices and the information on the manager authority are collectively managed in the authority management system, the management of the information on the manager authority is facilitated as compared with a case where the manager authority is individually managed in each information processing device.

According to the second aspect, the login authentication of the login information input into the management device can be performed without accessing another information processing device that is managed.

According to the third aspect, since the user authentication information of the plurality of users who use the plurality of information processing devices and the information on the manager authority are collectively managed in the authority management system, the management of the information on the manager authority is facilitated as compared with a case where the manager authority is individually managed in each information processing device.

According to the fourth aspect, since the user authentication information of the plurality of users who use the plurality of information processing devices and the information on the manager authority are collectively managed in the authority management system within the information processing system, the management of the information on the manager authority is facilitated as compared with a case where the manager authority is individually managed in each information processing device.

According to the fifth aspect, even in a case where it is difficult to determine whether the specific user has the manager authority by means of the authority management system, an operation requiring the manager authority is enabled.

According to the sixth aspect, since the operation requiring the manager authority is limited, an unintended setting change or the like using the information on the emergency manager authority is prevented.

According to the seventh aspect, a manager does not need to re-input the login information depending on whether operation content requires the manager authority.

According to the eighth aspect, the operation requiring the manager authority can be smoothly performed.

According to the ninth aspect, since the user authentication information of the plurality of users who use the plurality of information processing devices and the information on the manager authority are collectively managed in the authority management system, the management of the information on the manager authority is facilitated as compared with a case where the manager authority is individually managed in each information processing device.

### BRIEF DESCRIPTION OF THE DRAWINGS

Exemplary embodiment(s) of the present invention will be described in detail based on the following figures, wherein:
FIG. 1 is a schematic diagram illustrating an example of an information processing system according to a first exemplary embodiment of a technique of the present disclosure;
FIG. 2 is a block diagram illustrating an example of a hardware configuration of an authority management system according to an exemplary embodiment of the technique of the present disclosure;
FIG. 3 is a functional block diagram illustrating an example of functions of the authority management system illustrated in FIG. 2;
FIG. 4 is a sequence diagram illustrating an example of an authentication process in the information processing system illustrated in FIG. 1;
FIG. 5 is a schematic diagram illustrating an example of an information processing system according to a second exemplary embodiment of the technique of the present disclosure; and
FIG. 6 is a sequence diagram illustrating an example of an authentication process in the information processing system illustrated in FIG. 5.

### DETAILED DESCRIPTION OF THE INVENTION

Hereinafter, examples of exemplary embodiments of the technique of the present disclosure will be described with reference to the drawings. In the following, a range necessary for description for achieving an object of the present disclosure is schematically shown, and a range necessary for description of a corresponding part of the present disclosure will be generally described. For a part where the description is omitted, it is assumed that the part is based on the known art. The identical reference numerals are given to the identical or equivalent components and parts in each drawing. In addition, the dimensional ratios in the drawings are exaggerated for convenience of description and may differ from the actual ratios. Furthermore, in a case where a plurality of members that are the same or corresponding to each other are included in the drawing, reference numerals may be given to only some of the members in order to make the drawing easy to see.

### <First Exemplary Embodiment>

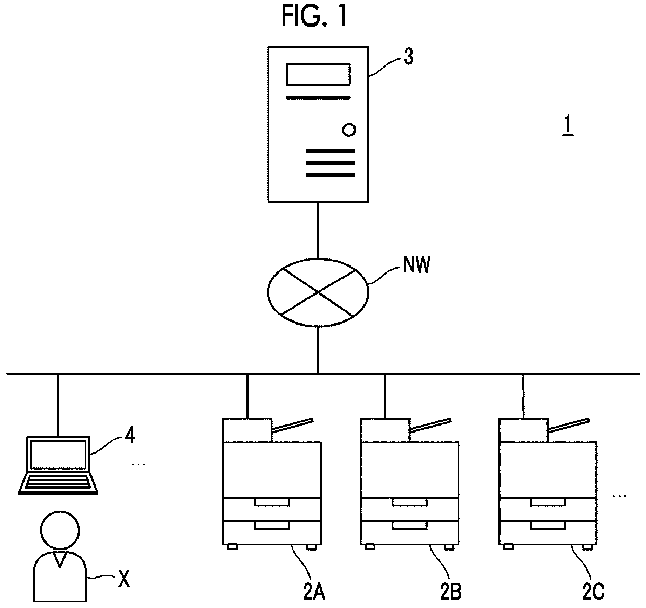

FIG. 1 is a schematic diagram illustrating an example of an information processing system according to an exemplary embodiment of a technique of the present disclosure. As illustrated in FIG. 1, an information processing system 1 according to the present exemplary embodiment includes image forming devices 2A, 2B, 2C, ..., which are examples of a plurality of information processing devices capable of receiving at least login information from a specific user, and an authority management system 3 according to the present exemplary embodiment that manages authority of users relating to the image forming devices 2A, 2B, 2C, ....

The image forming devices 2A, 2B, 2C, ... may be a multifunction peripheral (MFP), a printer, a copying machine, a facsimile, or the like installed, for example, in a place where a plurality of users belong, such as a company or a school. The image forming devices 2A, 2B, 2C, ... may be connected to each other via an intranet such as a local area network (LAN). In FIG. 1, three image forming devices 2A, 2B, and 2C are illustrated as the image forming devices, but the number of image forming devices in the present exemplary embodiment is not particularly limited.

In addition, a plurality of user terminals 4 owned by users who use the image forming devices 2A, 2B, 2C, ... may be connected to the intranet to which the image forming devices 2A, 2B, 2C, ... are connected. The user terminal 4 may be configured with a known computer such as a personal computer, a tablet terminal, or a smartphone. The user terminal 4 may include a user terminal owned by a management user X who uses and manages the image forming devices 2A, 2B, 2C, ....

As illustrated in FIG. 1, the authority management system 3 can be configured with a server apparatus for managing the authority of the image forming devices 2A, 2B, 2C, .... The authority management system 3 and the image forming devices 2A, 2B, 2C, ... may be communicably connected to each other via a network NW. In addition, the authority management system 3 configured by the server apparatus may be communicably connected not only to the image forming devices 2A, 2B, 2C, ... but also to the user terminal 4 via the network NW.

As described above, in the information processing system 1 according to the present exemplary embodiment, the authority management system 3 centrally manages the management of the user, such as login authentication and manager authority, of the image forming devices 2A, 2B, 2C, .... Therefore, the internal storage or the like of the image forming devices 2A, 2B, 2C, ... does not need to store information on users who can use the image forming devices 2A, 2B, 2C, ... or information on a manager who manages the image forming devices 2A, 2B, 2C, ....

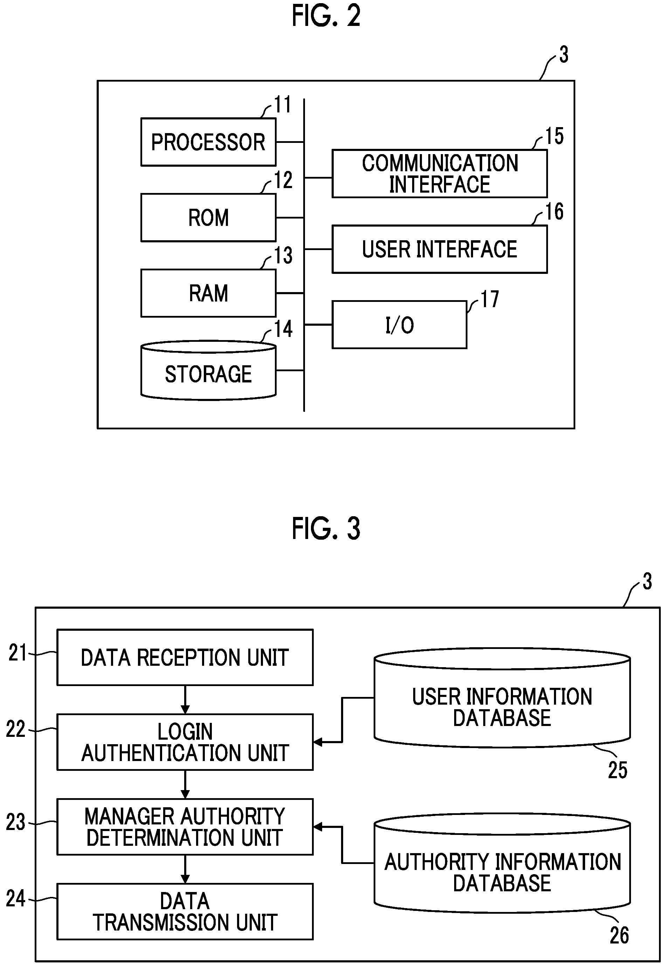

FIG. 2 is a block diagram illustrating an example of a hardware configuration of an authority management system according to an exemplary embodiment of the technique of the present disclosure. The authority management system 3 can be configured by a known computer as shown in FIG. 2. In the present exemplary embodiment, a case where the authority management system 3 is configured by one server apparatus has been described as an example, but the authority management system 3 can be implemented in various aspects. For example, the authority management system 3 may be implemented by combining a plurality of server apparatuses. In addition, the server apparatus configuring the authority management system 3 may be a server apparatus that operates in an on-premises environment or may be a server apparatus that operates in a cloud environment.

The authority management system 3 configured by a known computer may include at least a processor 11, a read-only memory (ROM) 12, a random-access memory (RAM) 13, a storage 14, a communication interface 15, a user interface 16, and an input/output unit (I/O) 17. In addition, the components may be connected to each other to be communicable with each other via an internal bus.

The processor 11 may be configured with, for example, a central processing unit (CPU), and may execute various programs or control various components of the authority management system 3. The processor 11 may read a program from the ROM 12 or the storage 14 and execute the program using the RAM 13 as a work area. The processor 11 can perform various types of arithmetic processing and the like in accordance with the program recorded in the ROM 12 or the storage 14.

The ROM 12 can store various programs and various data. The RAM 13 can temporarily store a program or data as a work area. The storage 14 may be configured with a storage device such as a hard disk drive (HDD) or a solid state drive (SSD), a flash memory, and the like, and can store various programs including an operating system and various data. The ROM 12, the RAM 13, and the storage 14 described above may function as a user information memory and an authority information memory.

The communication interface 15 may be an interface for communicating with the image forming devices 2A, 2B, 2C, ..., and the user terminal 4. As a communication method of the communication interface 15, wired or wireless communication is used, and as a communication standard, for example, Ethernet (registered trademark), FDDI, Wi-Fi (registered trademark), or the like may be used.

The user interface 16 may be an interface in a case where a user, such as an authority manager who performs setting of authority in the authority management system 3 and the like, uses the authority management system 3. The user interface 16 may include, for example, an input unit including a button, a touch panel, a pointing device, and the like, and a display unit configured with a liquid crystal display or an organic EL display. In addition, I/O 17 may function to connect the processor 11 to each unit of the authority management system 3.

FIG. 3 is a functional block diagram showing an example of the functions of the authority management system shown in FIG. 2. Various functions and processes in the authority management system 3 including the hardware configuration described above will be described below with reference to the functional block diagram shown in FIG. 3.

As shown in FIG. 3, the authority management system 3 according to the present exemplary embodiment may include a data reception unit 21 that receives data transmitted from the image forming devices 2A, 2B, 2C, ...; a login authentication unit 22 that performs login authentication for a specific user based on a request of the image forming devices 2A, 2B, 2C, ...; a manager authority determination unit 23 that determines whether the specific user has manager authority; and a data transmission unit 24 that transmits predetermined data to the image forming devices 2A, 2B, 2C, .... In addition, the authority management system 3 according to the present exemplary embodiment includes a user information database 25 as an example of the user information memory in which user authentication information that is used for login authentication is stored, and an authority information database 26 as an example of the authority information memory in which information on the manager authority of the user (hereinafter, also referred to as "manager authority information") is stored.

The data reception unit 21 is generally implemented by the communication interface 15 and can receive a login authentication request (also referred to as a login request) transmitted from the image forming devices 2A, 2B, 2C, .... The login authentication request is transmitted from the image forming device 2A to the authority management system 3 in a case where a specific user makes a login authentication request to a specific image forming device, for example, the image forming device 2A. The login authentication request includes login information input into the image forming device 2A by the specific user. The login information may be information for specifying the user, and may include a name of a user, a password for authentication, or the like.

The login authentication unit 22 is generally implemented by the processor 11, and performs login authentication using the login information included in the login authentication request received by the data reception unit 21 and the user authentication information stored in the user information database 25. Specifically, the login authentication is authentication of whether to permit a specific user included in the login information to log in to a specific image forming device, for example, the image forming device 2A. The user authentication information stored in the user information database 25 may be configured with, for example, a management table in which a name of a user who can log in or the like is managed for each of the image forming devices 2A, 2B, 2C, ....

The manager authority determination unit 23 is generally implemented by the processor 11, and determines whether the manager authority is granted by using the login information included in the login authentication request received by the data reception unit 21 and the manager authority information stored in the authority information database 26. Specifically, the determination of whether the manager authority is granted is a determination of whether a specific user included in the login information has the manager authority for a specific image forming device, for example, the image forming device 2A. The manager authority information stored in the authority information database 26 may be set in a format in which, for example, a name of a user having the manager authority is associated with each of the image forming devices 2A, 2B, 2C, ....

The data transmission unit 24 is generally implemented by the communication interface 15, and transmits a login authentication result in the login authentication unit 22 and a determination result of whether the manager authority is granted in the manager authority determination unit 23 to a specific image forming device that has transmitted the login authentication request, for example, the image forming device 2A.

The user information database 25 and the authority information database 26 can be implemented by, for example, the storage 14. The user authentication information and the manager authority information stored in the databases may be managed by the manager of the authority management system 3.

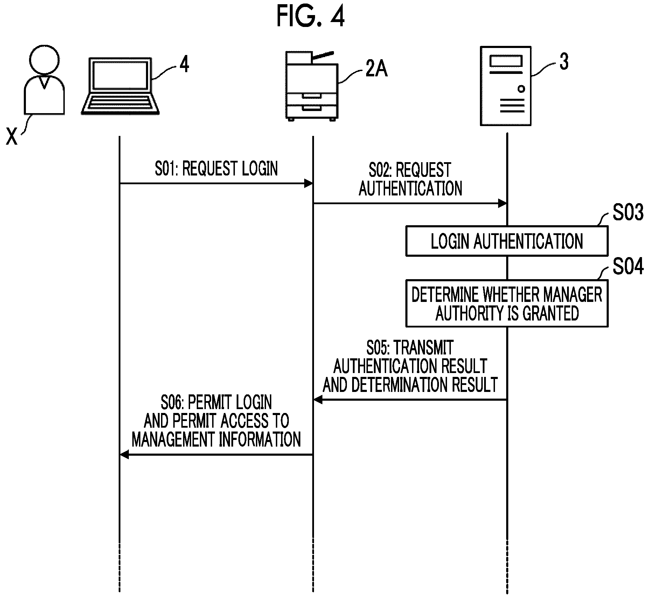

An example of a user authentication process in the information processing system 1 including the above-described configuration will be described generally with reference to FIG. 4. The user authentication process including the determination of whether the manager authority is granted, which will be described below, may be a process executed by the processor 11 described above based on a program. In this regard, the user authentication process described below may be provided in a form of a program (in other words, an authority management program) such as software including an instruction for causing the processor to execute a predetermined operation, in a form of a non-transitory recording medium in which the program is stored, or in a form of an application program provided via a network or the like.

In the user authentication process described below, as an example, a case where the management user X having both login authority and the manager authority for the image forming device 2A makes a login authentication request to the image forming device 2A via the user terminal 4 will be described.

FIG. 4 is a sequence diagram showing an example of an authentication process in the information processing system shown in FIG. 1. As illustrated in FIG. 4, the information processing system 1 according to the present exemplary embodiment includes, in the authority management system 3, at least a step of receiving the login information from the specific image forming device 2A among the plurality of image forming devices 2A, 2B, 2C, ... (corresponding to step S02 to be described later), a step of executing the login authentication of the specific user who inputs the login information, based on the user authentication information (corresponding to step S03 to be described later), a step of determining whether the specific user has the manager authority for the specific image forming device 2A, based on the manager authority information (corresponding to step S04 to be described later), and a step of transmitting the result of the login authentication and the determination result of the manager authority of the specific user to the specific image forming device 2A (corresponding to step S05 to be described later). The above will be described in detail below.

In the user authentication process in the information processing system 1 according to the present exemplary embodiment, for example, the management user X needs to check information accessible only by the manager (hereinafter, also referred to as "management information") relating to the specific image forming device 2A, and the management user X starts the user authentication process by transmitting a login authentication request to the specific image forming device 2A (step S01). The image forming device 2A that has received the login authentication request from the management user X transmits the login information included in the login authentication request to the authority management system 3 and requests the authority management system 3 to perform the login authentication for the management user X (step S02).

The authority management system 3 that has received the login authentication request in the data reception unit 21 first performs the login authentication for the image forming device 2A of the management user X by using the login information included in the login authentication request and the user authentication information stored in the user information database 25 in the login authentication unit 22 (step S03). Since the management user X has the login authority for the image forming device 2A, the login to the image forming device 2A is permitted through the login authentication.

Next, the authority management system 3 determines, by using the login information included in the login authentication request and the manager authority information stored in the authority information database 26 in the manager authority determination unit 23, whether the manager authority for the image forming device 2A is granted to the management user X (step S04). Since the management user X also has the manager authority for the image forming device 2A, the access to the information managed by the manager is permitted to the image forming device 2A by the above determination. Step S04 described above may be executed at the same time as step S03.

In a case where the above-described login authentication and the determination of whether the manager authority is granted are completed, the authority management system 3 transmits these results to the image forming device 2A by means of the data transmission unit 24 (step S05). In a case where the image forming device 2A that has received the login authentication result and the determination result of whether the manager authority is granted confirms that the management user X has both the login authority and the manager authority, the image forming device 2A notifies the user terminal 4 of the management user X that the login is permitted and notifies the user terminal 4 of the management user X that access to the management information that is the information accessible only by the manager is permitted (step S06). The image forming device 2A changes the notification content to the user terminal 4 based on the login authentication result and the determination result of whether the manager authority is granted, which are received from the authority management system 3. Specifically, for example, in a case where the user who has transmitted the login authentication request has only the login authority, only a notification that the login is permitted need be provided. For example, in a case where the user who has transmitted the login authentication request has only the manager authority, only a notification that access to the management information is permitted need be provided to the user terminal 4. Further, for example, in a case where the user who has transmitted the login authentication request does not have any of the login authority and the manager authority, only a notification that access to the user terminal 4 is rejected need be provided.

Regarding an operation from the management user X who have received both the notification that the login is permitted and the notification that the access to the management information is permitted in step S06 described above, the image forming device 2A receives both an operation requiring the manager authority and an operation not requiring the manager authority. Therefore, the management user X can use the image forming device 2Ain the same manner as the general user, such as printing a document, and can access the management information, in the common login authentication request. Accordingly, the management user X can perform the operation requiring the manager authority and the operation not requiring the manager authority without changing the login ID or the like, and thus the workability is improved.

Further, the notification that the access to the management information is permitted in step S06 may be provided by, for example, providing a mode switching button that is operated in a case where an operation requiring the manager authority is input. The mode switching button may be, for example, an icon or the like displayed on a display screen of the user terminal. The management user X to whom the mode switching button is provided can easily switch by a button operation between a case of using the image forming device 2A in the same way as the general user, such as a case of printing a document, and a case of performing an operation as a manager, and can smoothly transition to these operations.

In the above example, a case where the user who has made the login authentication request to the image forming device 2A is the management user X having both the login authority and the manager authority for the image forming device 2A is exemplified. In consideration of the above description, the operation of the information processing system 1 in a case where a general user who does not have the manager authority makes a login authentication request or a case where a user who does not have the login authority makes a login authentication request can be clearly understood by a person skilled in the art.

As described above, according to the information processing system 1, the authority management system 3, and the authority management program according to the present exemplary embodiment, the user authentication information and the manager authority information of the plurality of users who use the plurality of image forming devices 2A, 2B, 2C, ... are collectively managed by the authority management system 3. Therefore, the management of the manager authority is facilitated as compared with a case where the manager authority is individually managed in each of the image forming devices 2A, 2B, 2C, ....

As an option, in the information processing system 1 according to the present exemplary embodiment described above, for example, a communication failure may occur between the image forming devices 2A, 2B, 2C, ... and the authority management system 3 at the time of occurrence of a network failure or introduction of a new image forming device. In that case, it can be assumed that the user authentication and the like performed by the authority management system 3 described above cannot be performed. Therefore, in the present exemplary embodiment, as described above, for example, the image forming devices 2A, 2B, 2C, ... may be allowed to perform an emergency login even in a case of a single device in consideration of a case where the normal user authentication or the like cannot be performed. Specifically, in a case where communication with a specific image forming device, for example, communication between the image forming device 2A and the authority management system 3 is unavailable, the image forming device 2A enables the emergency manager authority information stored in the image forming device 2A. Then, for example, the image forming device 2A need only enable the determination of whether the specific user has the manager authority for the image forming device 2A based on the emergency manager authority information. In a case where the determination of whether the emergency manager authority is granted is enabled, the image forming device 2A can be used and managed even in a case where the communication with the authority management system 3 is unavailable.

On the other hand, in a case where access to the management information is permitted based on the above-described determination of whether the emergency manager authority is granted, there is a possibility that a management state is different from the management performed by a regular manager. Therefore, an operation requiring the manager authority permitted in the above case may be limited. Specifically, the operation with the emergency manager authority may be limited to, for example, an initial setting operation and an operation for communicating with the authority management system. With such a limitation, for example, it is possible to prevent a setting change not intended by the true manager from being performed by a user having only the emergency manager authority. In addition, the user can be prompted to restore communication with the authority management system 3.

### <Second Exemplary Embodiment>

In the first exemplary embodiment described above, a case where the information processing device is the plurality of image forming devices 2A, 2B, 2C, ... has been exemplified, but the information processing device is not limited thereto. Specifically, the information processing device may include one or more other information processing devices, specifically a management device 5 that manages the plurality of image forming devices 2A, 2B, 2C, .... The management device 5 may be a computer provided as a service on the Internet, that is, a so-called cloud. Hereinafter, a user authentication process or the like in the information processing system 1 including the management device 5 will be described. In the following description, in the information processing system 1A according to the second exemplary embodiment, the same reference numerals are given to the components having the same configurations as the components of the information processing system 1 according to the first exemplary embodiment, and the description thereof will be omitted. The following description will be made focusing on the configurations specific to the second exemplary embodiment.

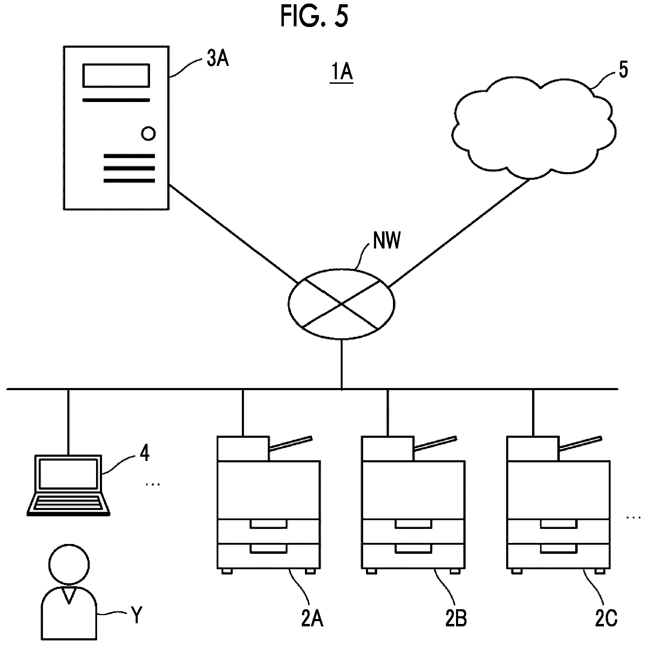

FIG. 5 is a schematic diagram illustrating an example of an information processing system according to the second exemplary embodiment of the technique of the present disclosure. As shown in FIG. 5, the information processing system 1A according to the present exemplary embodiment includes, at least, the image forming devices 2A, 2B, 2C, ..., which are examples of the plurality of information processing devices capable of receiving login information input from a specific user, the management device 5, which is another example of the plurality of information processing devices capable of receiving login information input from the specific user, and an authority management system 3A according to the present exemplary embodiment that manages authority of a user related to the image forming devices 2A, 2B, 2C, ..., or the management device 5.

The management device 5 may be connected to other devices via the network NW so as to be communicable with the image forming devices 2A, 2B, 2C, ... and may manage the usage records, the status of consumables, and the like of the image forming devices 2A, 2B, 2C, .... The management device 5 may be, for example, a cloud server that can provide a managed print service (MPS).

In addition to having the same functions as the authority management system 3, the authority management system 3A included in the information processing system 1A according to the present exemplary embodiment need only, for example, pre-publish an interface that can acquire authority information managed by the authority management system 3A from an information processing device outside the network to which the image forming devices 2A, 2B, 2C, ... belong, specifically from, for example, the management device 5. In this regard, the authority management system 3A may be configured with, for example, a server apparatus that operates in a cloud environment.

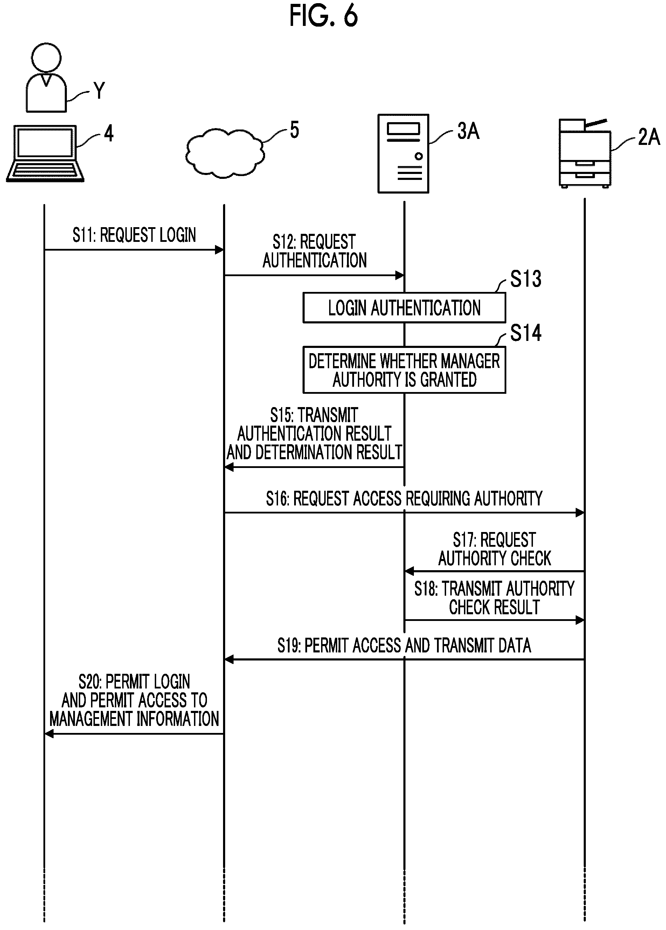

Hereinafter, an example of the user authentication process in the information processing system 1A including the above-described configuration will be described generally with reference to FIG. 6. In the user authentication process described below, as an example, a case where a management user Y having both the login authority and the manager authority for the image forming device 2A makes a login authentication request to the management device 5 via the user terminal 4 in order to view the information managed by the management device 5 will be described. Further, various processes of the authority management system 3A in the user authentication process described below can be implemented in a form of an authority check program or the like, in the same manner as in the first exemplary embodiment.

FIG. 6 is a sequence diagram illustrating an example of an authentication process in the information processing system illustrated in FIG. 5. The user authentication process in the information processing system 1A is started, for example, by transmitting a login authentication request to the management device 5 in order to acquire information on a specific image forming device managed by the management user Y using the management device 5, for example, the image forming device 2A (step S11). The management device 5 that has received the login authentication request from the user terminal 4 of the management user Y makes a request to the authority management system 3A for the login authentication including authentication of whether the management user Y has the manager authority for the image forming device 2A (step S12). The authority management system 3A that has received the login authentication request executes the login authentication of the management user Y (step S13) and the determination of whether the manager authority is granted (step S14) as in the authority management system 3 described above, and returns the results to the management device 5 (step S15).

As described above, in the information processing system 1A according to the present exemplary embodiment, the login authentication based on the login information input into the management device 5 can be performed without accessing the image forming device 2A. Therefore, it is not necessary to store the manager authority information and the like in the management device 5.

As described above, the management user Y has both the login authority and the manager authority for the image forming device 2A. The management device 5 transmits an access request to the image forming device 2A together with the information on the authority determination result acquired from the authority management system 3A, in order to acquire the information on the image forming device 2A (step S16). The image forming device 2A that has received the access request from the management device 5 transmits a request for checking the authority of the management user Y included in the access request to the authority management system 3A for checking (step S17). In a case where the check result indicating that the management user Y has the manager authority is acquired from the authority management system 3A (step S18), the image forming device 2A permits the access of the management device 5 and transmits data such as management information to the management device 5 as necessary (step S19). The management device 5 that has received the access permission or the like from the image forming device 2A transmits the login permission and the access permission to the management information of the image forming device 2A to the user terminal 4 of the management user Y (step S20).

The management user Y who has acquired the login permission to the management device 5 and the access permission to the management information can not only view various pieces of management information on the image forming device 2A but also perform an operation requiring the manager authority, such as an operation of ordering consumables.

Here, in a case where the manager authority information is managed in the image forming device as in the related art, the external device such as the management device 5 described above has difficulty in referring to the authority information due to the presence of the firewall of the intranet to which the image forming device is connected. Therefore, in order to acquire the management information of the image forming device by means of the external device, it is necessary to determine whether authority is granted on the external device side, and it is necessary to hold the manager authority information in the external device. However, as in the second exemplary embodiment described above, in a case where the authority management system 3A operates in the cloud environment and an interface capable of acquiring the authority information is disclosed in advance, it is not necessary to store the manager authority information in the external device, and the management, such as updating, of the authority information is facilitated. In addition, since it is not necessary to store the manager authority information in the external device, for example, the setting change, for example, in a case where the manager is changed, can be reduced.

As described above, the information processing system 1A, the authority management system 3A, and the authority management program according to the present exemplary embodiment can also obtain the same effects as in the first exemplary embodiment. **In** addition, in the information processing system 1A, user authentication or the like in the information processing device, such as the management device 5, installed outside the image forming devices 2A, 2B, 2C, ... can also be smoothly implemented.

In addition, in the above-described exemplary embodiments, the image forming devices 2A, 2B, 2C, ..., and the management device 5 are exemplified as the information processing devices, but the information processing device is not limited thereto. Specifically, the information processing device includes various devices (so-called IoT devices) such as various meters and mobile terminals that can be connected to the Internet and can exchange information.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present disclosure is not limited to the above-described exemplary embodiments, and can be variously modified and implemented without departing from the gist of the present disclosure. All of the above are included in the technical idea of the present disclosure. **In** addition, unless otherwise specified in the specification, the respective components of the present disclosure are not limited to one and may be present in a plurality.

### (Supplementary Notes)

(((1))) An authority management system comprising:
   a processor;
   a user information memory in which user authentication information of a plurality of users who use a plurality of information processing devices is stored; and
   an authority information memory in which information on manager authority for the plurality of information processing devices of the plurality of users is stored,
   wherein the processor is configured to:
      receive, from a specific information processing device among the plurality of information processing devices, login information input into the specific information processing device;
      execute login authentication for a specific user who inputs the login information, based on the user authentication information;
      determine whether the specific user has manager authority for the specific information processing device, based on the information on the manager authority; and
      transmit a result of the login authentication and a determination result of the manager authority of the specific user to the specific information processing device.
(((2))) The authority management system according to (((1))),
   wherein the plurality of information processing devices include a management device that manages one or more other information processing devices.
(((3))) An authority management program that causes a processor to execute processing of:
   receiving, from a specific information processing device, login information input into the specific information processing device;
   executing login authentication for a specific user who inputs the login information, based on user authentication information of a plurality of users who use a plurality of information processing devices including the specific information processing device;
   determining whether the specific user has manager authority for the specific information processing device, based on information on manager authority for the plurality of information processing devices of the plurality of users; and
   transmitting a result of the login authentication and a determination result of the manager authority of the specific user to the specific information processing device.
(((4))) An information processing system comprising:
   a plurality of information processing devices configured to receive login information input from a specific user; and
   an authority management system including a processor, a user information memory in which user authentication information of a plurality of users who use the plurality of information processing devices is stored, and an authority information memory in which information on manager authority for the plurality of information processing devices of the plurality of users is stored,
   wherein the processor is configured to
      receive, from a specific information processing device among the plurality of information processing devices, the login information;
      execute login authentication for the specific user who inputs the login information, based on the user authentication information;
      determine whether the specific user has manager authority for the specific information processing device, based on the information on the manager authority; and
      transmit a result of the login authentication and a determination result of the manager authority of the specific user to the specific information processing device.
(((5))) The information processing system according to (((4))),
   wherein, in a case where communication between the specific information processing device and the authority management system is unavailable, the specific information processing device enables information on emergency manager authority stored in the specific information processing device, and determines whether the specific user has the manager authority for the specific information processing device based on the information on the emergency manager authority.
(((6))) The information processing system according to (((5))),
   wherein operations requiring the manager authority granted in a case where the specific user is determined to have the manager authority based on the information on the emergency manager authority are an initial setting operation and an operation for enabling the communication with the authority management system.
(((7))) The information processing system according to any one of (((4))) to (((6))),
   wherein the specific information processing device receives both an operation not requiring the manager authority from the specific user authenticated with the login authentication and determined to have the manager authority, and an operation requiring the manager authority.
(((8))) The information processing system according to (((7))),
   wherein the specific information processing device provides the specific user authenticated with the login authentication and determined to have the manager authority with a mode switching button that is operated in a case where the operation requiring the manager authority is input.

With the authority management system according to (((1))), since the user authentication information of the plurality of users who use the plurality of information processing devices and the information on the manager authority are collectively managed in the authority management system, the management of the information on the manager authority is facilitated as compared with a case where the manager authority is individually managed in each information processing device.

With the authority management system according to (((2))), the login authentication of the login information input into the management device can be performed without accessing another information processing device that is managed.

With the authority management program according to (((3))), since the user authentication information of the plurality of users who use the plurality of information processing devices and the information on the manager authority are collectively managed in the authority management system, the management of the information on the manager authority is facilitated as compared with a case where the manager authority is individually managed in each information processing device.

With the information processing system according to (((4))), since the user authentication information of the plurality of users who use the plurality of information processing devices and the information on the manager authority are collectively managed in the authority management system within the information processing system, the management of the information on the manager authority is facilitated as compared with a case where the manager authority is individually managed in each information processing device.

With the information processing system according to (((5))), even in a case where it is difficult to determine whether the specific user has the manager authority by means of the authority management system, an operation requiring the manager authority is enabled.

With the information processing system according to (((6))), since the operation requiring the manager authority is limited, an unintended setting change or the like using the information on the emergency manager authority is prevented.

With the information processing system according to (((7))), a manager does not need to re-input the login information depending on whether operation content requires the manager authority.

With the information processing system according to (((8))), the operation requiring the manager authority can be smoothly performed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1, 1A: information processing system
2A, 2B, 2C: image forming device (one example of information processing device)
3, 3A: authority management system
4: user terminal
5: management device (another example of information processing device)
11: processor
12: ROM
13: RAM
14: storage
15: communication interface
16: user interface
17: I/O
21: data reception unit
22: login authentication unit
23: manager authority determination unit
24: data transmission unit
25: user information database (one example of user information memory)
26: authority information database (one example of authority information memory)
X, Y: management user

## Claims

1. An authority management system comprising:
a processor;
a user information memory in which user authentication information of a plurality of users who use a plurality of information processing devices is stored; and
an authority information memory in which information on manager authority for the plurality of information processing devices of the plurality of users is stored,
wherein the processor is configured to:
receive, from a specific information processing device among the plurality of information processing devices, login information input into the specific information processing device;
execute login authentication for a specific user who inputs the login information, based on the user authentication information;
determine whether the specific user has manager authority for the specific information processing device, based on the information on the manager authority; and
transmit a result of the login authentication and a determination result of the manager authority of the specific user to the specific information processing device.

2. The authority management system according to claim 1,
wherein the plurality of information processing devices include a management device that manages one or more other information processing devices.

3. An authority management program that causes a processor to execute processing of:
receiving, from a specific information processing device, login information input into the specific information processing device;
executing login authentication for a specific user who inputs the login information, based on user authentication information of a plurality of users who use a plurality of information processing devices including the specific information processing device;
determining whether the specific user has manager authority for the specific information processing device, based on information on manager authority for the plurality of information processing devices of the plurality of users; and
transmitting a result of the login authentication and a determination result of the manager authority of the specific user to the specific information processing device.

4. An information processing system comprising:
a plurality of information processing devices configured to receive login information input from a specific user; and
an authority management system including a processor, a user information memory in which user authentication information of a plurality of users who use the plurality of information processing devices is stored, and an authority information memory in which information on manager authority for the plurality of information processing devices of the plurality of users is stored,
wherein the processor is configured to
receive, from a specific information processing device among the plurality of information processing devices, the login information;
execute login authentication for the specific user who inputs the login information, based on the user authentication information;
determine whether the specific user has manager authority for the specific information processing device, based on the information on the manager authority; and
transmit a result of the login authentication and a determination result of the manager authority of the specific user to the specific information processing device.

5. The information processing system according to claim 4,
wherein, in a case where communication between the specific information processing device and the authority management system is unavailable, the specific information processing device enables information on emergency manager authority stored in the specific information processing device, and determines whether the specific user has the manager authority for the specific information processing device based on the information on the emergency manager authority.

6. The information processing system according to claim 5,
wherein operations requiring the manager authority granted in a case where the specific user is determined to have the manager authority based on the information on the emergency manager authority are an initial setting operation and an operation for enabling the communication with the authority management system.

7. The information processing system according to any one of claims 4 to 6,
wherein the specific information processing device receives both an operation not requiring the manager authority from the specific user authenticated with the login authentication and determined to have the manager authority, and an operation requiring the manager authority.

8. The information processing system according to claim 7,
wherein the specific information processing device provides the specific user authenticated with the login authentication and determined to have the manager authority with a mode switching button that is operated in a case where the operation requiring the manager authority is input.

9. An authority management method comprising:
receiving, from a specific information processing device, login information input into the specific information processing device;
executing login authentication for a specific user who inputs the login information, based on user authentication information of a plurality of users who use a plurality of information processing devices including the specific information processing device;
determining whether the specific user has manager authority for the specific information processing device, based on information on manager authority for the plurality of information processing devices of the plurality of users; and
transmitting a result of the login authentication and a determination result of the manager authority of the specific user to the specific information processing device.
